# EUROPÄISCHE PATENTSCHRIFT

(11) **EP 1 669 714 B1**
(45) Veröffentlichungstag und Bekanntmachung des Hinweises auf die Patenterteilung: **21.01.2009**
(21) Anmeldenummer: 04029466.2
(22) Anmeldetag: 13.12.2004
(51) Int. Cl.: G01B 7/312, G01B 11/10

(54) **Eichung eines Exzentrizitätsmessgeräts mit Hilfe einer Eichhülse**
Calibration of an eccentricity gage by using a calibration sleeve
Calibrage d'un dispositif de mesure d'excentricité au moyen d'un manchon de calibrage

(43) Veröffentlichungstag der Anmeldung: 14.06.2006
(73) Patentinhaber: ZUMBACH ELECTRONIC AG, CH-2552 Orpund (CH)
(72) Erfinder: Studer, Urs Peter, 4125 Riehen (CH)
(74) Vertreter: Köster, Hajo

(56) Entgegenhaltungen:
- EP-A- 0 612 975
- DE-A1- 2 111 213
- DE-A1- 10 219 848
- US-A- 4 086 044

## Beschreibung

Die Erfindung betrifft ein Verfahren zum Eichen und/oder Überprüfen der Kalibrierung einer Messvorrichtung zur berührungslosen Bestimmung der Exzentrizität und des Durchmessers von isolierten Strängen, insbesondere Kabeln, bei der der Außendurchmesser des Stranges optisch und die Lage des Leiters in dem Strang induktiv bestimmt werden.

Bei Kabeln, die hier stellvertretend für alle Arten von Strängen stehen, die einen elektrisch leitenden Kern oder Träger aufweisen, ist es wesentlich, dass diese Kabel einerseits den erforderlichen Durchmesser besitzen, um die geforderten elektrischen Eigenschaften aufzuweisen und um insbesondere ausreichend zu isolieren. Andererseits ist es von Bedeutung, dass der Leiter zentrisch im Kabelmantel bzw. in der isolierenden Umhüllung verläuft.

Um diese Parameter zu bestimmen, ist beispielsweise aus der DE 102 19 848.9 A1 eine berührungslose Zentrizitäts- und Durchmesser-Messvorrichtung bekannt. Diese bekannte Messvorrichtung verfügt über eine optische Messeinrichtung zur Bestimmung des Außendurchmessers und der Lage eines Stranges. Ferner verfügt diese Messvorrichtung über eine induktive/magnetische Messspulenvorrichtung zur Bestimmung der Lage des Leiters. Durch induktive Einkoppelung eines hochfrequenten Stromes in den Leiter wird ein elektromagnetisches Feld um den Leiter erzeugt. Mit mehreren Messspulen wird die magnetische Feldstärke als Funktion des Abstandes vom Zentrum des Leiters bestimmt.

Weitere Vorrichtungen zur Messung der Exzentrizität und des Durchmessers von isolierten Kabeln sind in der Beschreibung der genannten DE 102 19 848 A1 aufgeführt. Auf die dort erwähnten Druckschriften wird Bezug genommen.

Um die Qualität und Genauigkeit der durchgeführten Messungen zu erhöhen und sicherzustellen, ist eine Kalibrierung der Durchmessermessung erforderlich und auch allgemein bekannt. Eine derartige Kalibrierung kann auf einfache Weise mit einem oder mehreren zylindrischen Eichmustern mit einem geeichten Durchmesser erfolgen. Die Eichmuster können in praktisch jeder amtlichen Prüfstelle geeicht werden.

Die exakte Bestimmung und Kalibrierung der Exzentrizität einer Isolation über einem Leiter ist bis heute jedoch nicht möglich, da geeignete Eichmuster fehlen. Wird beispielsweise ein Eichnormal gefertigt, kann mit dem klassischen Messmethoden eine genaue Überprüfung nicht vorgenommen werden, da der im Inneren des Kabels liegende Leiter messtechnisch nicht mehr zugänglich ist.

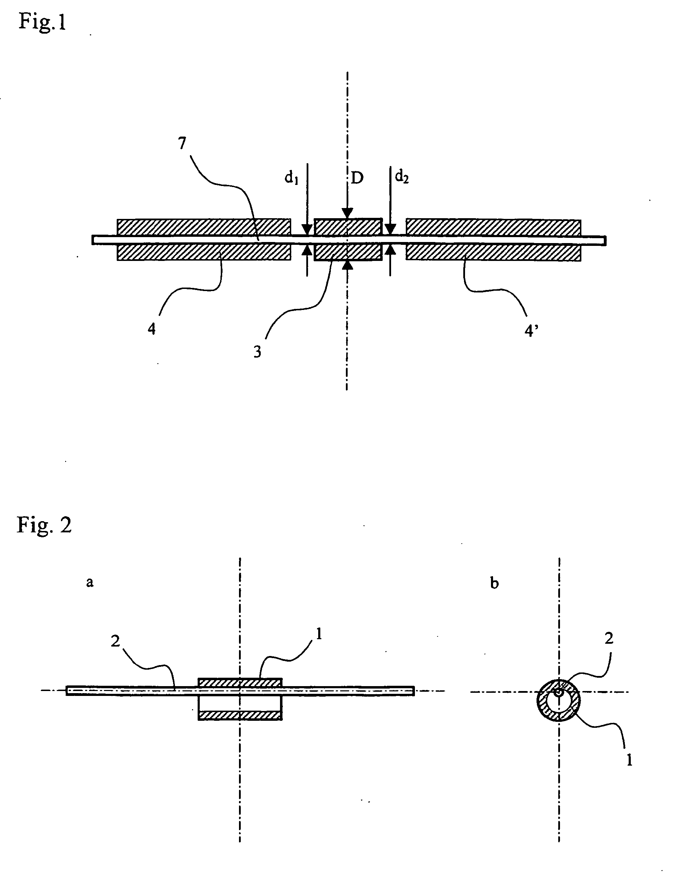

Um nun dennoch eine Kalibrierung vornehmen zu können, wurden zu diesem Zweck bisher spezielle Eichmuster hergestellt, bei denen die Umhüllung des Leiters bzw. die Isolation des Leiters in unmittelbarer Nähe des Messzone entfernt wurde. Diese Situation ist in der Figur 1 dargestellt.

In der Figur 1 ist ein Kabel mit einem elektrisch leitenden Draht bzw. Leiter 7 gezeigt, das eine Isolation 4, 4' besitzt. Die Isolation bzw. Umhüllung 4, 4' wurde in unmittelbarer Nähe der Messzone D entfernt, wodurch ein Eichmuster 3 entsteht. Vor und hinter dieser Messzone D wurden die Durchmesser d₁ und d₂ bestimmt.

Die wahren Werte für die Durchmesser und die Wandstärken bzw. die Exzentrizität wurden in der Art bestimmt, dass angenommen wurde, dass der Leiter 7 100 % gerade ist und dass daher die beiden Messungen außerhalb der Mess- bzw. Kalibrierzone D ausreichen, um die genaue Position des Leiters 7 in der maßgeblichen Messzone D zu definieren bzw. eichen zu können. Da aber die geforderte Genauigkeit der Messung z. B. bei Kommunikationskabeln in Bruchteilen von Mikrometern liegt, hat die Erfahrung gezeigt, dass aufgrund der zu großen Streuung der Messwerte bei der Verwendung der geschilderten Eichmuster die geforderte Genauigkeit bei weitem nicht erreicht werden kann.

Aufgabe der vorliegenden Erfindung ist es daher, einen Weg aufzuzeigen, mit dem der geschilderte Nachteil behoben und eine genaue Bestimmung der Exzentrizität möglich ist.

Gelöst wird diese Aufgabe durch ein Verfahren mit den Merkmalen gemäß der Ansprüche.

Erfindungsgemäß wird ein blanker, elektrisch leitfähiger Eichdraht in die Messvorrichtung eingesetzt. Auf diesen Eichdraht wird eine Eichhülse aufgeschoben oder aufgesetzt, die aus einem elektrisch nicht leitenden Material besteht. Die Ausgestaltung dieser Eichhülse und der genauere Einsatz und die genauere Vorgehensweise sind nachstehend anhand der beiliegenden Zeichnungen näher erläutert, von denen zeigen:
- Figur 1: einen Längsschnitt durch ein Kabel mit einem isolierten Leiter nach dem Stand der Technik, wobei die Isolation an zwei Stellen entfernt ist,
- Figur 2: einen Längsschnitt und einen Querschnitt durch einen erfindungsgemäß eingesetzten Eichdraht mit einer aufgeschobenen Eichhülse,
- Figur 3: eine Querschnittsansicht durch den Eichdraht mit aufgesetzter Eichhülse und mit Bezugsbuchstaben,
- Figur 4: eine Querschnittsansicht durch einen Eichdraht mit einer Eichhülse nach einer weiteren Ausführungsform mit Bezugsbuchstaben und
- Figur 5: eine schematische Seitenansicht einer per se bekannten Produktionslinie zur Herstellung von Kabeln mittels Extrusion und mit einer eingesetzten Messvorrichtung.

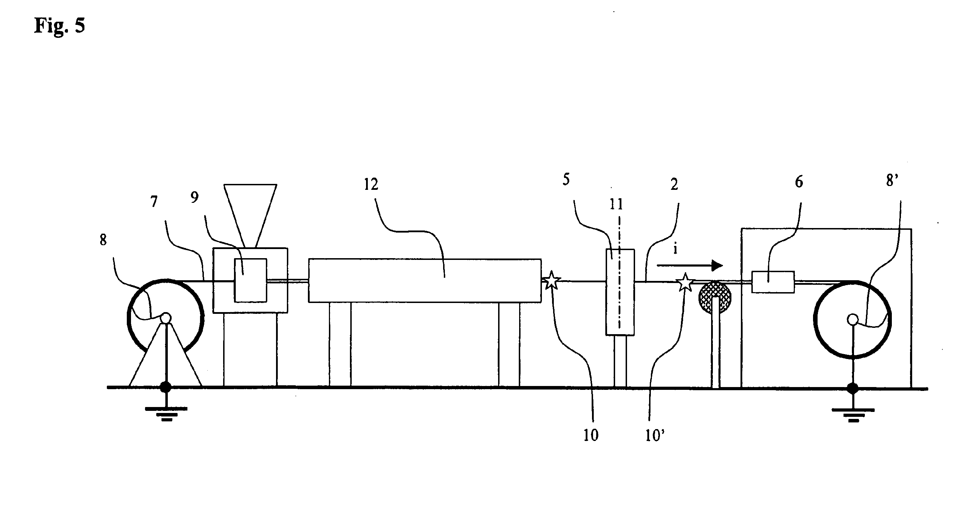

Wie man aus der Figur 5 sieht, welche in schematischer Darstellung eine Produktionslinie zur Herstellung von extrudierten Kabeln zeigt, wird der Leiter 7 von einer Rolle oder ähnlichem abgerollt. Bei der Produktion des Kabels wird dieser Leiter 7 in einer Extrudiervorrichtung 9 auf per se bekannte Weise mit einer Ummantelung bzw. einer Isolation 4 versehen. Von dort wird das Kabel durch eine Kühlstrecke 12 sowie durch eine Messvorrichtung 5, die nachstehend näher beschrieben ist, und einen Induktor 6 in Richtung des Pfeils i) zu einer Aufwickeleinheit geführt. Der Leiter 7 ist sowohl extruderseitig 8 als auch am Ende der Produktionslinie 8' mit dem Erdpotential verbunden. Dies dient dazu, dass der vom Induktor 6 induzierte Strom i fließen kann.

Die Messvorrichtung 5 entspricht bei der in der Figur 5 gezeigten Produktionslinie derjenigen, die in der genannten DE 102 19 848.9 A1 beschrieben ist. Bei dieser bekannten Vorrichtung werden die optische Bestimmung des Außendurchmessers des Kabels und die magnetische bzw. induktive Bestimmung der Lage des Leiters 7 in dem Kabel in einer Messebene 11 durchgeführt. Das erfindungsgemäße Verfahren kann jedoch nicht nur bei einer derartigen Vorrichtung mit nur einer Messebene 11, sondern auch bei solchen bekannten Vorrichtungen Anwendung finden, bei denen die optische und die magnetische Messebene voneinander beabstandet sind.

Für die Vorbereitung der Kalibrierung der genannten Messvorrichtung 5 zur Messung der Exzentrizität und des Durchmessers von isolierten Kabeln geht man zweckmäßigerweise wie folgt vor.
1. Vorzugsweise wird vor dem Einbau der Messvorrichtung 5 in die in der Figur 5 gezeigte Produktionslinie die optische Durchmessermessung kalibriert. Dies erfolgt vorzugsweise mit mindestens zwei verschiedenen Eichnormalen. Eine derartige Kalibrierung der Durchmessermessung erfolgt auf per se bekannte Weise.
2. Die Messvorrichtung 5 wird funktionsfähig und vorzugsweise im kalibrierten Zustand (siehe oben unter 1.) in die in der Figur 5 gezeigte Produktionslinie auf bekannte Weise eingesetzt. Dies bedeutet, dass der zu isolierende Leiter 7 durch die Messvorrichtung 5 und dem Induktor 6 gezogen wird. Der Leiter 7 wird - wie oben geschildert - extruderseitig 8 und auch am Ende der Produktionslinie 8' mit Erdpotential verbunden, damit der vom Induktor 6 induzierte Strom fließen kann. Die Produktionslinie steht dabei still. Der Leiter 7 ist in dieser Phase der Vorbereitung vorzugsweise nicht mit einer Isolation umgeben.
3. Der Leiter 7, der zur Herstellung des fertigen Kabels dient und isoliert werden soll, wird am Ort der Messung durchtrennt.
4. Ein blanker Eichdraht 2, der aus einem elektrisch leitenden Material und vorzugsweise aus Kupfer besteht, wird durch die Messvorrichtung 5 und bei 10 vor der Messvorrichtung 5 sowie bei 10' nach der Messvorrichtung zwischen den Anlageteilen eingespannt, so dass er gerade durch die Messvorrichtung 5 verläuft. Vorzugsweise wird der Eichdraht 2 derart eingespannt, dass nach erstmaliger Verstreckung um ca. 5 bis 10 % eine Restspannung den Eichdraht 2 absolut gerade hält.
5. Der Eichdraht 2 wird an seinen beiden Enden 10, 10' mit den Enden des durchgetrennten Leiters 7 der herzustellenden Kabels derart verbunden, dass der Stromkreis für den induzierten Strom wieder geschlossen ist.

Der danach erhaltene Zustand ist in der Figur 5 schematisch dargestellt.

Es ist im übrigen auch möglich, bei der oben beschriebenen Vorbereitung statt eines nackten Leiters einen bereits ummantelten Leiter und somit ein fertiges Kabel zu verwenden.

Für die erfindungsgemäße Kalibrierung der oben beschriebenen Messvorrichtung geht man wie folgt vor:
a) Ein blanker, elektrisch leitfähiger Eichdraht 2 wird wie oben bei der Vorbereitung beschrieben in die Messvorrichtung 5 eingesetzt und derart elektrisch verbunden, dass ein induzierter Strom hindurchfließen kann.
b) Der Durchmesser d, dₓ, dy des Eichdrahtes 2 wird optisch mit der Messvorrichtung 5, die insbesondere kalibriert ist, bestimmt.
c) Der blanken Eichdraht 2 wird in eine neutrale induktive Nulllage und somit in eine Position im Messfeld verbracht, in der die magnetische Feldstärke für alle Messspulen zur Bestimmung der induktiven Lage zumindest im wesentlichen die gleiche ist, und für diese Nulllage wird die genaue Position des Eichdrahtes 2 im Messfeld mit Hilfe der optischen Messung (optische Lage) ermittelt; diese Lage wird als Nulllage für das Messsystem definiert.
d) Der Eichdraht 2 wird an verschiedene, von der Nulllage abweichende Positionen im Messfeld gebracht, und für diese Positionen werden die optische Lage sowie die induktive Lage des Eichdrahtes bestimmt und zueinander in Beziehung gebracht.

Die optische Durchmesser-Messung des Eichdrahtes 2 stellt kein Problem dar, denn der Durchmesser kann mit den bisher bekannten Geräten bzw. Messeinrichtungen optisch genau bestimmt werden. Auch die Lage des Eichdrahtes 2 im Messfeld kann ohne weiteres optisch genau bestimmt werden. Die Lage des Mittelpunktes 15 des Eichdrahtes 2 befindet sich dann auf der Hälfte der Durchmesserdistanz.

Die oben beschriebene Nulllage stellt eine Art Ausgangspunkt dar, von dem für die weiteren nachstehend beschriebenen Messungen ausgegangen wird. Vorzugsweise wird die Messvorrichtung derart justiert, dass diese Nulllage in der Nähe des Mittelpunktes des Messfeldes liegt und insbesondere dem Mittelpunkt des Messfeldes entspricht.

Für diese Nulllage fallen die optisch und die induktiv ermittelten Lagen (hier als optische Lage und als induktive Lage bezeichnet) zusammen.

Mit anderen Worten, der mit Hilfe der optischen Messung bestimmte und berechnete Mittelpunkt 15 des Eichdrahtes 2 fällt mit dem durch die induktive Messung ermittelten und berechneten Mittelpunkt zusammen.

Wenn im Rahmen der vorliegenden Unterlagen von einer induktiven Lage oder der Bestimmung einer induktiven Lage die Rede ist, dann soll damit insbesondere zum Ausdruck gebracht werden, dass die Feldstärke von den zum Einsatz gebrachten Messeinrichtungen, insbesondere Spulen, bestimmt wird. Aus den dabei gemessenen Daten ergibt sich dann die sogenannte induktive Lage.

Der Mittelpunkt 15 des Eichdrahtes 2 liegt natürlich auf der Längsmittelachse dieses Eichdrahtes 2. Da die optische Messung jedoch in einer Ebene, nämlich der Messebene erfolgt, wird dieser Punkt als Mittelpunkt bezeichnet. Der Querschnitt des Eichdrahtes ist dabei insbesondere kreisförmig.

Danach wird der Eichdraht 2 an verschiedene Positionen im Messfeld verbracht bzw. gefahren. Diese Positionen unterscheiden sich von der Nulllage und können durch die optische Messung genau bestimmt werden. Es wird dabei optisch ermittelt, wo sich der Eichdraht 2 und damit auch der Mittelpunkt 15 des Eichdrahtes 2 befinden. Für diese Positionen wird dann ferner induktiv die Lage des Eichdrahtes 2 bestimmt. Dazu werden für die angefahrenen Positionen die induktiven Messwerte für die Feldstärke der Messspulen festgestellt. Die induktive Lage und die optische Lage werden dadurch miteinander in Beziehung gebracht. Die optische Messung der optischen Lage und die Ermittlung der Feldstärkewerte und somit der induktiven Lage erfolgen vorzugsweise gleichzeitig.

Auf diese Weise kann jeder optisch genau ermittelten Lage die für diese Lage ermittelten induktiven Messwerte zugeordnet werden und auf geeignete Weise, beispielsweise tabellarisch oder mit Hilfe eines Rechners, festgehalten werden. Es findet somit eine Vermessung des Messfeldes statt. Fehlende Zwischenwerte können erforderlichenfalls durch Interpolation ermittelt werden. Somit kann jeder induktiven Lage bzw. jedem induktive Wert eine optische Lage zugeordnet werden und vice versa. Mit anderen Worten, jeder induktiven Messung kann eine Lage des Eichdrahtes 2 im Messfeld zugeordnet werden. Somit wird die induktive Messung bzw. Lage anhand der optischen Lage bzw. Messung kalibriert, welche ihrerseits bereits wie oben beschrieben kalibriert wurde.

Der Eichdraht 2 wird im übrigen vorzugsweise derart durch das Messfeld geführt bzw. das Messfeld wird derart in Bezug auf den Eichdraht 2 ausgerichtet, dass der Eichdraht 2 senkrecht zum Messfeld verläuft. Dieses Messfeld liegt im übrigen in der Messebene 11 (Figur 5).

Zweckmäßigerweise wird die erfindungsgemäß Kalibrierung gemäß den obigen Punkten a) - d) auch für solche Varianten durchgeführt, bei denen der Eichdraht 2 einen gewissen Winkel zur Senkrechten auf dem Messfeld besitzt und somit leicht schräg durch das Messfeld verläuft.

Zum erfindungsgemäßen Überprüfen bzw. Eichen der erfindungsgemäßen Kalibrierung werden dann folgende Schritte durchgeführt:
e) Eine auf den Eichdraht 2 aufgeschobene oder aufgesetzte Eichhülse 1, 1', die aus einem elektrisch nicht leitenden Material besteht, wird in das Messfeld der Messvorrichtung 5 eingeführt oder eingeschoben. Dies erfolgt vorzugsweise derart, dass sie mittig zur Messebene 11 der optischen Durchmessermessung gelegen kommt.
f) Der Eichdraht 2 wird zusammen mit der Eichhülse 1, 1' im Messfeld an verschiedene Positionen verbracht, und für diese Positionen werden die optische Lage der Eichhülse 1, 1' sowie die induktive Lage des Eichdrahtes 2 bestimmt.
g) Die Lage des Eichdrahtes 2 im Messfeld und der Abstand der Lage des Eichdrahtes 2 von der Lage der Eichhülse 1, 1' und somit die Exzentrizität E werden mit Hilfe der in Stufe f) ermittelten optischen Lage der Eichhülse 2 und mit Hilfe der bekannten Daten für die Abmessungen der Eichhülse 2 rechnerisch bestimmt,
h) Für die in Stufe g) errechnete Lage des Eichdrahtes 2 wird diesem Eichdraht 2 eine induktive Lage aus der Stufe d) zugeordnet und mit der in Stufe f) gemessenen induktiven Lage verglichen.

Vorzugsweise wird die Kalibrierung gemäß den Stufen a) bis d) wiederholt, wenn der in Stufe h) angestellte Vergleich einen Wert ΔE ergibt, der einen Grenzwert überschreitet. Es empfiehlt sich dann auch die Stufen e) bis h) nach erneuter Kalibrierung zu wiederholen, um die erneute Kalibrierung zu eichen und/oder zu überprüfen.

Wenn hier davon die Rede ist, dass in den Stufen d) und f) der Eichdraht 2 an verschiedenen Positionen verbracht oder verschoben wird, dann geschieht dies zweckmäßigerweise bei ortskonstantem Eichdraht. Bewegt bzw. verschoben wird vielmehr die Messvorrichtung 5 und damit das Messfeld.

Für die Überprüfung und/oder Eichung der Kalibrierung der Messvorrichtung 5 dient die Eichhülse 1,1', die aus einem elektrisch nicht leitenden Material und vorzugsweise aus einem formstabilen Material besteht. Zwei mögliche Ausführungsformen einer derartigen Eichhülse sind in den Figuren 2 - 4 näher gezeigt. Die Eichhülse 1, 1' stellt ein zylindrisches Element mit einem definierten, bekannten Außendurchmesser dar. Der Außendurchmesser ist dabei über den gesamten Umfang und die gesamte Länge der Eichhülse 1, 1' der gleiche.

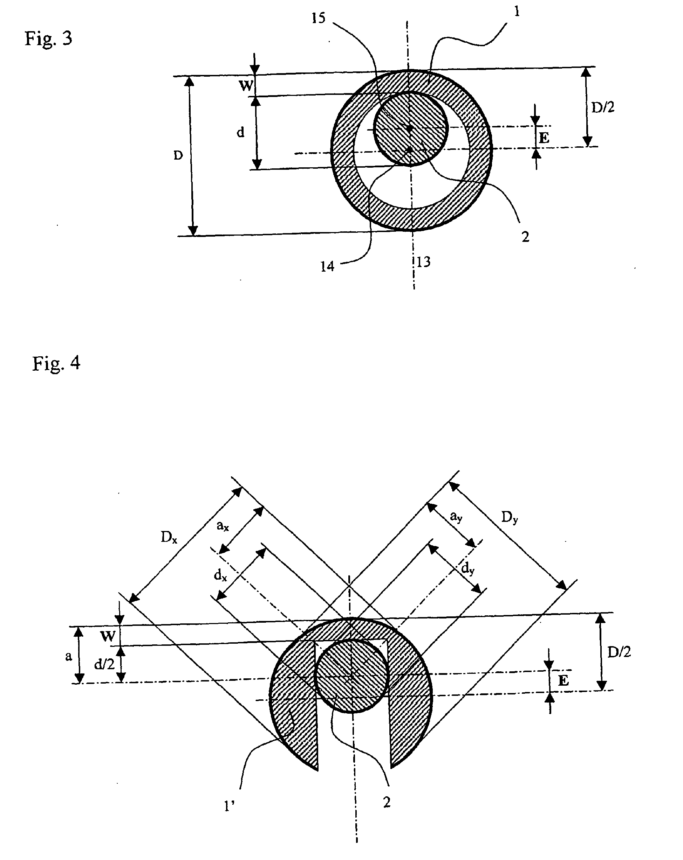

Diese Eichhülse kann ein Röhrchen bzw. ein hohlzylindrisches Element 1 darstellen; diese Ausführungsform ist in den Figuren 2 und 3 dargestellt. Eine weitere Ausführungsform für eine derartige Eichhülse ist in der Figur 4 gezeigt, worauf später näher eingegangen wird.

Die in den Figuren 2 und 3 gezeigte Eichhülse 1 muss, da sie einen Hohlzylinder darstellt, auf den Eichdraht 2 aufgeschoben werden, bevor dieser Eichdraht 2 an den Stellen 10, 10' mit dem Leiter 7 verbunden wird. Die in der Figur 4 gezeigte Eichhülse 1' kann auch nach Verbinden des Eichdrahtes 2 an seinen beiden freien Enden mit dem Leiter 7 auf den Eichdraht 2 aufgesetzt werden.

Nach dem Aufschieben der in den Figuren 2 und 3 gezeigten Eichhülse 1 auf den Eichdraht 2, liegt die Eichhülse 1 auf dem Eichdraht 2 bedingt durch die Schwerkraft mit ihrer Innenmantelfläche auf. Für die Eichhülse 1 ist es an sich ausreichend, wenn sie lediglich an diesem Auflagepunkt über eine definierte Wandstärke W verfügt. In diesem Fall ist es jedoch erforderlich, die Eichhülse 1 außen mit einer Markierung zu versehen, so dass sie richtig und somit derart auf den Eichdraht 2 aufgesetzt wird, dass der Auflagepunkt auf der Achse 13 liegt.

Nach einer bevorzugten Ausführungsform ist die Wandstärke W der Eichhülse 1 über den gesamten Umfang und über die gesamte Länge die gleiche. Eine derartige Eichhülse bzw. ein derartiges Eichnormal kann auf übliche Weise hergestellt werden und in einem durchschnittlichen amtlichen Eichlabor mit einer Messunsicherheit von weniger als 0,3 µm vermessen und zertifiziert werden. Mit anderen Worten, die erfindungsgemäß eingesetzte Eichhülse besitzt einen definierten Außendurchmesser und eine definierte Wandstärke über den gesamten Umfang und über ihre gesamte Länge. Bei dieser bevorzugten Ausführungsform ist es daher unerheblich, an welcher Stelle die Eichhülse 1 auf dem Eichdraht 2 zur Auflage gelangt.

Die Eichhülse 1, 1' bzw. dieses Röhrchen muss nur den Bereich der optischen Durchmessermessung abdecken und kann daher sehr kurz sein. Eine derartige Eichhülse ist daher auch mit wenig Aufwand und Kosten mit der nötigen Präzision herzustellen und auszumessen.

Die Eichhülse 1, 1' dient zum Simulieren der Umhüllung bzw. Isolation eines Kabels. Da der Durchmesser der Eichhülse genau bekannt ist, kann der Mittelpunkt 14 der Eichhülse 1, 1' durch die optische Messung genau bestimmt werden. Die Lage des Eichdrahtes 2, welcher bei aufgesetzter bzw. aufgeschobener Hülse 1, 1' den Leiter simuliert, ist exzentrisch zur Lage der Eichhülse 1, 1'. Mit anderen Worten, der Mittelpunkt 14 der Eichhülse 1, 1' ist von dem Mittelpunkt 15 des Eichdrahtes 2 um den Wert E beabstandet.

In der Stufe f) bringt man den Eichdraht zusammen mit der aufgeschobenen Eichhülse 1, 1' an verschiedene Positionen im Messfeld. Für diese Positionen wird die optische Lage der Eichhülse 1, 1' bestimmt. Die Lage des Eichdrahtes 2 im Messfeld kann jedoch aufgrund der aufgeschobenen Eichhülse 1,1' optisch nicht bestimmt werden. Für diese Positionen ist es daher nur möglich, die induktive Lage des Eichdrahtes 2 zu ermitteln. Die Bestimmung der optischen Lage der Eichhülse 1, 1' sowie der induktiven Lage des Eichdrahtes 2 erfolgt in der Stufe f) vorzugsweise gleichzeitig.

Allerdings kann für diese in der Stufe f) angefahrenen Positionen anhand der ermittelten optischen Lage der Eichhülse 1, 1' und der gemessenen Abmessungen der Eichhülse 1, 1' und des Eichdrahtes 2 die Exzentrizität E oder der Abstand der Lage des Mittelpunktes 15 des Eichdrahtes 2 von der Lage des Mittelpunktes 14 der Eichhülse 1, 1' errechnet werden.

In der Stufe h) wird dann den in der Stufe g) errechneten Lagen des Eichdrahtes 2 für die verschiedenen Positionen diesem Eichdraht 2 diejenige induktive Lage zugeordnet, die aus der Stufe d) bekannt ist. In der Stufe d) wurde ja bestimmt, welche induktiven Messwerte den verschiedenen optisch genau bestimmten Positionen im Messfeld zukommen.

Dann wird die aus der Stufe d) zugeordnete induktive Lage mit der in der Stufe f) gemessenen induktiven Lage verglichen. Der Vergleich dieser beiden Werte muss innerhalb einer bestimmten Genauigkeit liegen. Mit anderen Worten, der oben bereits genannte Wert Δ E muss niedriger sein als ein bestimmter Grenzwert. Andernfalls muss eine erneute Kalibrierung auf die oben beschriebene Weise wiederholt werden.

Obiger Sachverhalt sei nachstehend noch einmal unter Bezug auf die Figur 3 näher erläutert. Dort ist eine Situation gezeigt, bei der die optische Durchmessermessung von der Seite erfolgt.

Nachdem die oben beschriebenen Schritten a), b), c) und d) durchgeführt wurden, ergibt sich die in der Figur 3 dargestellte Situation. Die Bestimmung der Position der Eichhülse 1, welche eine Isolation simuliert, ist ohne weiteres mittels der optischen Messung möglich, da der Durchmesser D der Eichhülse 1 bekannt ist. Zudem stellt die Eichhülse 1 einen zylindrischen Körper dar. Somit kann mit Hilfe der optischen Messung ohne weiteres der Mittelpunkt 14 bzw. D/2 berechnet werden. Die Wandstärke W stellt eine festgelegte, bekannte, geeichte Größe dar.

Der Eichdraht 2 verläuft nun exzentrisch zur Eichhülse 1, denn der Mittelpunkt 14 der Eichhülse 1 ist vom Mittelpunkt 15 des Eichdrahtes 2 um den Abstand E beabstandet.

Der Abstand E lässt sich durch einfache Rechenoperation bestimmen. Der Durchmesser d des Eichdrahtes 2 wurde optisch vermessen und bestimmt. Da auch die Lage des Mittelpunktes 14 der Eichhülse 1 bekannt ist, lässt sich die Lage des Mittelpunktes 15 des Eichdrahtes 2 und somit dessen Lage genau errechnen.

Bringt man nun den Eichdraht 2 an verschiedene Positionen im Messfeld, dann kann man für diese Positionen die genaue optische Lage der Eichhülse 1 bestimmen. Für diese Position kann man dann auch aufgrund der oben beschriebenen Rechenoperation die Lage des Eichdrahtes 2 im Messfeld errechnen. Das gleiche gilt für den Mittelpunkt 15 dieses Eichdrahtes 2. Damit gibt sich eine quasi indirekt ermittelte, genau feststehende Lage des Eichdrahtes 2 im Messfeld.

Dieser errechneten Lage des Eichdrahtes 2 im Messfeld kann man aufgrund der Stufe d) einen bestimmten Feldstärkewert bzw. eine bestimmte induktive Lage zuordnen. Diese zugeordnete induktive Lage wird mit der tatsächlich in der Stufe f) gemessenen induktiven Lage des Eichdrahtes 2 verglichen. Bei einer zutreffenden Kalibrierung müssten die Werte für die Feldstärke bzw. die beiden induktiven Lagen die gleichen sein. Anders ausgedrückt bedeutet dies, dass der Wert E in der Figur 3 der gleich sein müsste. Ergibt sich eine Differenz Δ E, dann kann es je nach Größe dieses Differenzwertes erforderlich sein, die Kalibrierung auf die oben beschriebene Weise zu wiederholen.

In der Figur 4 ist eine weitere Ausführungsform für eine erfindungsgemäß einsetzbare Eichhülse 1' gezeigt. Diese Eichhülse 1' stellt einen Zylinderstab dar, der eine Nut aufweist, die sich von radial außen nach radial innen über den Mittelpunkt des Zylinders hinaus erstreckt. Diese Nut besitzt eine rechteckige Querschnittsform. Die Mittellinie dieser Nut liegt auf einem Durchmesser dieses zylindrischen Stabes. Diese Eichhülse 1' liegt, wenn sie auf den Eichdraht 2 aufgeschoben oder aufgesetzt ist, mit dem Boden der nach unten offenen Nut auf dem Eichdraht 2 auf. Auch bei dieser Eichhülse 1' ist der Außendurchmesser über den Umfang und die gesamte Länge der gleiche sowie bekannt und zertifiziert. Vorzugsweise handelt es sich um eine solche Eichhülse, bei der alle Abmessungen bekannt und zertifiziert sind. Dies gilt somit auch für die Abmessungen der Nut.

Bei der in der Figur 4 gezeigten Ausführungsform findet die optische Messung von Lage und Durchmesser des Leiters und der Eichhülse 1', welche der Isolation eines Kabels entspricht, in zwei Richtungen bzw. Lagen statt, die 45 ° zur Senkrechten geneigt sind. Die optischen und magnetischen Werte für beide 45 °-Lagen werden dabei zweckmäßigerweise gleichzeitig und in derselben Ebenen ermittelt. Dies ist mit der eingangs genannten Vorrichtung gemäß der DE 102 19 848 A1 möglich.

### Bezugszeichenliste

- 1, 1': Eichhülse
- 2: Eichdraht
- 3: Eichmuster nach dem Stand der Technik
- 4, 4': Umhüllung/Isolation
- 5: Messvorrichtung
- 6: Induktor
- 7: Leiter des Kabels
- 8, 8': Erdungen des Leiters 7
- 9: Extrudiervorrichtung
- 10, 10': elektrische Verbindungen des Eichdrahtes 2 mit dem Leiter 7
- 11: Messebene
- 12: Kühlstrecke
- 13: Achse
- 14: Mittelpunkt der Eichhülse 1,1'
- 15: Mittelpunkt des Eichdrahtes 2

## Patentansprüche

1. Verfahren zum Eichen und/oder Überprüfen der Kalibrierung einer Messvorrichtung zur berührungslosen Bestimmung der Exzentrizität und des Durchmessers von isolierten Strängen, insbesondere Kabeln, bei der der Außendurchmesser des Stranges optisch und die Lage des Leiters in dem Strang induktiv bestimmt werden,
**gekennzeichnet durch** folgende Schritte:
a) ein blanker, elektrisch leitfähiger Eichdraht wird gerade **durch** die Messvorrichtung hindurchgeführt und derart elektrisch verbunden, dass ein induzierter Strom **durch** den Eichdraht fließen kann,
b) der Durchmesser des Eichdrahtes wird optisch mit der Messvorrichtung bestimmt,
c) der blanken Eichdraht wird in eine neutrale induktive Nulllage und somit in eine Position im Messfeld verbracht, in der die magnetische Feldstärke für alle Messspulen zur Bestimmung der induktiven Lage zumindest im wesentlichen die gleiche ist, und für diese Nulllage wird die genaue Position des Eichdrahtes im Messfeld mit Hilfe der optischen Messung ermittelt,
d) der Eichdraht wird an verschiedene, von der Nulllage abweichende Positionen im Messfeld gebracht, und für diese Positionen werden die optische Lage sowie die induktive Lage des Eichdrahtes bestimmt und miteinander in Beziehung gebracht,
e) eine auf den Eichdraht aufgeschobenen oder aufgesetzte Eichhülse, die aus einem elektrisch nicht leitenden Material besteht, wird in das Messfeld der Messvorrichtung eingeführt,
f) der Eichdraht wird zusammen mit der Eichhülse im Messfeld an verschiedene Positionen verbracht, und für diese Positionen werden die optische Lage der Eichhülse sowie die induktive Lage des Eichdrahtes bestimmt,
g) die Lage des Eichdrahtes im Messfeld und der Abstand der Lage des Eichdrahtes von der Lage der Eichhülse und somit die Exzentrizität werden mit Hilfe der in Stufe f) ermittelten optischen Lage der Eichhülse und mit Hilfe der bekannten Daten für die Abmessungen Eichhülse rechnerisch bestimmt, und
h) für die in Stufe g) errechnete Lage des Eichdrahtes wird diesem Eichdraht eine induktive Lage aus der Stufe d) zugeordnet und mit der in Stufe f) gemessenen induktiven Lage verglichen.

2. Verfahren nach Anspruch 1,
**dadurch gekennzeichnet,**
**dass**
die Kalibrierung gemäß den Stufen a) bis d) wiederholt wird, wenn der in Stufe h) angestellte Vergleich einen Wert ergibt, der einen Grenzwert überschreitet, und dass insbesondere auch die Stufen e) bis h) nach erneuter Kalibrierung wiederholt werden.

3. Verfahren nach Anspruch 1 oder 2,
**dadurch gekennzeichnet,**
**dass** die Messvorrichtung derart justiert wird, dass die Nulllage in Stufe c) dem Mittelpunkt des Messfeldes entspricht.

4. Verfahren nach einem der vorhergehenden Ansprüche,
**dadurch gekennzeichnet,**
**dass** die Bestimmung der induktiven Lage und der optischen Lage in der Stufe d) und/oder in der Stufe f) gleichzeitig durchgeführt werden.

5. Verfahren nach einem der vorhergehenden Ansprüche,
**dadurch gekennzeichnet,**
**dass** als elektrisch leitfähiger Eichdraht ein Kupferdraht eingesetzt wird.

6. Verfahren nach einem der vorhergehenden Ansprüche,
**dadurch gekennzeichnet,**
**dass** als Eichhülse eine hohlzylindrische Eichhülse mit definierter Wandstärke eingesetzt wird.

7. Verfahren nach einem der Ansprüche 1 bis 5,
**dadurch gekennzeichnet,**
**dass** als Eichhülse eine stabförmige Eichhülse mit zylindrischer Außenmantelfläche eingesetzt wird, die über eine sich in Längsrichtung erstreckende sowie durchgehende Ausnehmung verfügt.

8. Verfahren nach Anspruch 7,
**dadurch gekennzeichnet,**
**dass** als stabförmige Eichhülse eine solche eingesetzt wird, deren Ausnehmung eine sich radial erstreckende Nut mit rechteckigem Querschnitt darstellt.

## Claims

1. Method for calibrating and / or checking the calibration of a measuring device for contact-free determination of the eccentricity and the diameter of insulated strands, particularly cables, in which the outer diameter of the strand is optically determined and the position of the conductor in the strand is inductively determined,
**characterised by** the following steps:
a) a blank, electrically conductible calibration wire is guided straight through the measuring device and is electrically connected so that an induced current can flow through the calibration wire,
b) the diameter of the calibration wire is optically determined with the measuring device,
c) the blank calibration wire is brought into a neutral inductive zero position and hence into a position in the measurement field in which the magnetic field strength is at least essentially the same for all measurement coils for the determination of the inductive position, and for this zero position the exact position of the calibration wire in the measurement field is determined with the aid of the optical measurement,
d) the calibration wire is brought to different positions in the measurement field deviating from the zero position, and for these positions the optical position and the inductive position of the calibration wire are determined and brought into a correlation,
e) a calibration sleeve consisting of a non electrically conductive material pushed onto or placed on the calibration wire is introduced into the measurement field of the measuring device,
f) the calibration wire is brought together with the calibration sleeve in the measurement field to different positions and for these positions the optical position of the calibration sleeve and the inductive position of the calibration wire are determined,
g) the position of the calibration wire in the measurement field and the distance of the position of the calibration wire from the position of the calibration sleeve and hence the eccentricity are calculated using the optical position of the calibration sleeve determined in step f) and the known data for the dimensions, and
h) for the position of the calibration wire calculated in step g) an inductive position from step d) is assigned to this calibration wire and compared with the inductive position measured in step f).

2. Method according to claim 1,
**characterised in that**
the calibration according to steps a) to d) is repeated if the comparison carried out in step h) produces a value which exceeds a threshold value and that in particular the steps e) to h) are also repeated after re- calibration.

3. Method according to claim 1 or 2,
**characterised in that**
the measuring device is adjusted so that the zero position in step c) corresponds to the middle point of the measurement field.

4. Method according to one of the preceding claims,
**characterised in that**
the determination of the inductive position and the optical position are carried out simultaneously in step d) and / or in step f).

5. Method according to one of the preceding claims,
**characterised in that**
a copper wire is used as an electrically conductible calibration wire.

6. Method according to one of the preceding claims,
**characterised in that**
a hollow cylindrical calibration sleeve with defined wall thickness is used as a calibration sleeve.

7. Method according to one of claims 1 to 5,
**characterised in that**
a rod-shaped calibration sleeve with a cylindrical outer shell surface is used as a calibration sleeve which has a continuous recess extending in longitudinal direction.

8. Method according to claim 7,
**characterised in that**
a calibration sleeve whose recess constitutes a radially extending groove with a rectangular cross-section is used as a rod-shaped calibration sleeve.

## Revendications

1. Procédé d'étalonnage et/ou de contrôle de l'étalonnage d'un dispositif de mesure destiné à déterminer sans contact l'excentricité et le diamètre de branches isolées, notamment de câbles, en déterminant par des moyens optiques le diamètre extérieur de la branche et par des moyens inductifs la position du conducteur dans la branche, **caractérisé par** les étapes suivante
a) on fait passer un fil étalon dénudé, électriquement conducteur, tout droit dans le dispositif de mesure et l'on établit une liaison électrique de façon à faire circuler un courant induit dans le fil étalon,
b) on détermine optiquement le diamètre du fil étalon au moyen du dispositif de mesure,
c) on place le fil étalon dénudé dans une position zéro inductive et neutre et donc dans une position dans le champ de mesure dans laquelle l'intensité du champ magnétique est au moins sensiblement la même pour toutes les bobines de mesure destinées a-déterminer la position inductive et, pour cette position zéro, on détermine la position précise du fil étalon dans le champ de mesure à l'aide de la mesure optique,
d) on place le fil étalon en différentes positions, distinctes de la position zéro, dans le champ de mesure et, pour ces positions, on détermine la position optique ainsi que la position inductive du fil étalon et on établit une relation entre celles-ci,
e) on introduit dans le champ de mesure du dispositif de mesure une gaine étalon, placée ou glissée sur le fil étalon, qui est en un matériau électriquement non conducteur,
f) on place le fil étalon, ainsi que la gaine étalon, dans différentes positions dans le champ de mesure et, pour ces positions, on détermine la position optique de la gaine étalon ainsi que la position inductive du fil étalon,
g) on détermine, par le calcul, la position du fil étalon dans le champ de mesure et la distance entre la position du fil étalon et la position de la gaine étalon ainsi que l'excentricité à l'aide de la position optique du fil étalon déterminée à l'étape f) et à l'aide des données connues relatives aux dimensions de la gaine étalon, et
h) pour la position du fil étalon calculée à l'étape g), on associe à ce fil étalon une position inductive obtenue à l'étape d) et on la compare à la position inductive mesurée à l'étape f).

2. Procédé selon la revendication 1, **caractérisé en ce que** l'on recommence l'étalonnage effectué aux étapes a) à d) si la comparaison faite à l'étape h) donne une valeur qui est supérieure à une valeur limite, et **en ce que**, notamment, l'on recommence également les étapes e) à h) après un nouvel étalonnage.

3. Procédé selon la revendication 1 ou 2, **caractérisé en ce que** le dispositif de mesure est réglé de telle sorte que la position zéro à l'étape c) correspond au milieu du champ de mesure.

4. Procédé selon l'une des revendications précédentes, **caractérisé en ce que** la détermination de la position inductive et celle de la position optique à l'étape d) et/ou à l'étape f) sont effectuées simultanément.

5. Procédé selon l'une des revendications précédentes, **caractérisé en ce que** l'on utilise un fil de cuivre comme fil étalon électriquement conducteur.

6. Procédé selon l'une des revendications précédentes, **caractérisé en ce que** l'on utilise comme gaine étalon une gaine étalon cylindrique et creuse d'épaisseur de paroi définie.

7. Procédé selon l'une des revendications 1 à 5, **caractérisé en ce que** l'on utilise comme gaine étalon une gaine étalon en forme de barre dont la surface d'enveloppe extérieure est cylindrique et possède un creux qui s'étend de bout en bout dans la direction longitudinale.

8. Procédé selon la revendication 7, **caractérisé en ce que** l'on utilise comme gaine étalon en forme de barre une gaine dont le creux représente une gorge de section rectangulaire s'étendant radialement.
